# FASCICULE DE BREVET EUROPEEN

(11) **EP 3 149 632 B1**
(45) Date de publication et mention de la délivrance du brevet: **07.09.2022**
(21) Numéro de dépôt: 15732829.5
(22) Date de dépôt: 01.06.2015
(51) Int. Cl.: G06F 30/23

(54) **PROCEDE ET DISPOSITIF DE RECONSTRUCTION NUMERIQUE D'UN VOLUME ELEMENTAIRE REPRESENTATIF D'UNE MICROSTRUCTURE DE MATERIAU COMPOSITE.**
VERFAHREN UND VORRICHTUNG FÜR DIE DIGITALE REKONSTRUKTION EINES EINE MIKROSTRUKTUR AUS VERBUNDSTOFF DARSTELLENDEN ELEMENTAREN VOLUMENS
METHOD AND DEVICE FOR DIGITAL RECONSTRUCTION OF AN ELEMENTARY VOLUME REPRESENTING A MICROSTRUCTURE OF COMPOSITE MATERIAL

(30) Priorité: 02.06.2014 FR 1454990
(43) Date de publication de la demande: 05.04.2017
(73) Titulaire: SAFRAN, 75015 Paris (FR)
(72) Inventeur: TRANQUART, Bastien, F-92160 Antony (FR); MANDEL, Robin, F-75012 Paris (FR)
(74) Mandataire: Cabinet Beau de Loménie
(86) Numéro de dépôt international: PCT/FR2015/051439
(87) Numéro de publication internationale: WO 2015/185840

(56) Documents cités:
- PAN Y ET AL: "Numerical generation of a random chopped fiber composite RVE and its elastic properties", COMPOSITES SCIENCE AND TECHNOLOGY, ELSEVIER, UK, vol. 68, no. 13, octobre 2008 (2008-10), pages 2792-2798, XP025474509, ISSN: 0266-3538, DOI: 10.1016/J.COMPSCITECH.2008.06.007 [extrait le 2008-06-12] cité dans la demande
- M. BAILAKANAVAR ET AL: "Automated modeling of random inclusion composites", ENGINEERING WITH COMPUTERS, vol. 30, no. 4, 21 décembre 2012 (2012-12-21), pages 609-625, XP055167682, ISSN: 0177-0667, DOI: 10.1007/s00366-012-0310-x
- W. LECLERC ET AL: "Influence of morphological parameters of a 2D random short fibre composite on its effective elastic properties", 21EME CONGRÈS FRANÇAIS DE MÉCANIQUE - CFM2013, vol. 14, 20 décembre 2013 (2013-12-20), pages 1-6, XP055208771, ISSN: 2257-7777, DOI: 10.1051/meca/2013078

## Description

L'invention concerne le domaine général de la modélisation numérique.

Elle vise plus particulièrement un procédé de reconstruction numérique d'un volume élémentaire représentatif (ou VER) d'une microstructure de matériau composite, tel que par exemple d'un matériau composite à fibres longues discontinues (ou DFC pour « Discontinuous Fiber Composites » en anglais) fabriqué à partir de copeaux ou « chips » de fibres (ex. de verre, de carbone ou autre) enchevêtrés aléatoirement et pré-imprégnés d'une résine thermodurcissable ou thermoplastique encore appelée matrice.

De tels matériaux composites sont particulièrement bien adaptés pour la réalisation de pièces à géométrie complexe (comprenant par exemple des nervures ou des bossages), telles qu'utilisées notamment dans l'industrie aéronautique ou dans de nombreuses autres industries mécaniques. Ces pièces sont fabriquées de façon connue à partir de préformes découpées dans une nappe de matière formée à partir des copeaux de fibres enchevêtrés, puis assemblées dans un moule et soumises à un cycle de thermo-compression. Les copeaux peuvent être également insérés dans le moule avant thermo-compression.

Les performances de ces matériaux composites dépendent directement de l'enchevêtrement des copeaux de fibres, et souffrent d'une variabilité importante due au caractère aléatoire de la microstructure (géométrie) du matériau composite à l'échelle des copeaux.

Afin de prendre en compte l'influence de la microstructure du matériau composite (qui peut varier d'un point à l'autre de la pièce) sur le comportement de la pièce, on utilise aujourd'hui dans l'industrie des méthodes d'analyse multi-échelles qui permettent de prévoir les propriétés mécaniques en tout point d'une pièce en fonction des caractéristiques des constituants du matériau composite et de leur arrangement local. Ces méthodes d'analyse multi-échelles permettent l'estimation de propriétés homogènes macroscopiques en se basant sur la réponse moyenne d'un volume élémentaire représentatif VER de la microstructure du matériau, c'est-à-dire d'une entité géométrique représentative (modélisant) statistiquement de la microstructure du matériau composite.

Ces méthodes sont également connues sous le nom de méthodes « d'homogénéisation ». Elles s'opposent aux modèles de simulation classiques pour lesquels le comportement du matériau composite est présupposé (loi de comportement macroscopique identifiée par essais).

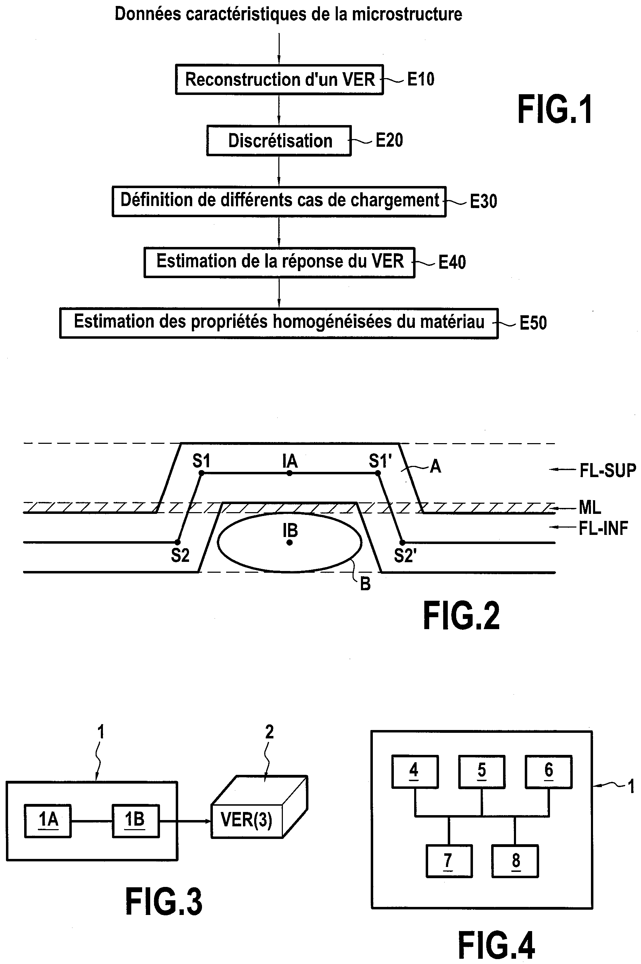

Il existe dans l'état de la technique plusieurs méthodes d'homogénéisation permettant le passage d'une échelle microscopique à une échelle macroscopique. Le document de P. Kanouté et al. intitulé « Multiscale Methods for Composite », Arch Comput Methods Eng, 2009, 16, pages 31-75 propose notamment une méthode numérique par éléments finis dont les principales étapes sont représentées sur la **figure 1****.**

Selon cette méthode, un volume élémentaire représentatif VER de la microstructure du matériau composite est tout d'abord reconstruit (étape E10) à partir de données caractéristiques de la microstructure, extraites par exemple d'images 3D (en trois dimensions) obtenues par microscopie ou par tomographie, ou à partir d'un modèle mathématique prédéfini de génération de structures.

Puis le volume ainsi reconstruit est discrétisé (étape E20) à l'aide d'une méthode des éléments finis, connue en soi, au cours de laquelle le volume est maillé.

Le volume maillé obtenu est ensuite soumis à différents cas de chargement prédéfinis (ex. cisaillements, tractions, etc.) (étape E30) et sa réponse moyenne à ces chargements est estimée à partir d'un calcul par éléments finis par exemple (étape E40). On déduit de cette réponse des propriétés homogénéisées de la pièce de matériau composite (étape E50).

Une des difficultés principales de cette approche réside dans les étapes E10 de reconstruction numérique du VER et E20 de discrétisation, en particulier pour des matériaux composites tels que des matériaux à fibres longues discontinues (DFC), fabriqués à partir d'un enchevêtrement aléatoire de copeaux de fibres pré-imprégnées et présentant un fort taux volumique de fibres. Ces étapes se basent sur une connaissance *a priori* de la forme, de la géométrie et des positions des éléments de fibre de renfort du matériau composite puis sur le remplissage d'un volume prédéterminé en conformité avec cette forme, cette géométrie et ces positions.

Il existe dans l'état actuel de la technique plusieurs méthodes de reconstruction numérique d'un VER de matériau composite.

Une première méthode s'appuie sur le tirage aléatoire dans le volume d'une pluralité de formes géométriques rigides (i.e. indéformables) destinées à modéliser les éléments de fibres de renfort enchevêtrés du matériau composite. A chaque tirage d'un nouvel élément de fibre, celui-ci n'est pas autorisé à entrer en collision avec ni à interpénétrer un élément de fibre déjà positionné dans le volume, et une distance minimale entre des éléments de fibre voisins est imposée. Si cette première méthode est rapide à mettre en œuvre, on comprend bien toutefois que le taux obtenu de remplissage du volume en fibres est très faible ; il n'excède pas typiquement 40%, ce qui n'est pas représentatif de la réalité des matériaux composites considérés.

Pour pallier à cet inconvénient, une solution consiste à procéder à des tirages supplémentaires de formes géométriques équivalentes mais dont la taille est réduite progressivement. Cette solution combinée à la précédente permet d'atteindre un taux de remplissage de l'ordre de 80%. Toutefois, une telle technique n'est pas pertinente pour certains matériaux composites et en particulier pour les matériaux composites à fibres longues discontinues dont les copeaux de fibre de renfort ont des tailles similaires les uns par rapport aux autres.

R. Luchoo et al. proposent, dans le document intitulé « Three-dimensional numerical modelling of discontinuous fibre composite architectures », 18ème Conférence Internationale sur les matériaux composites, pages 356-362, 2011, une deuxième méthode plus particulièrement destinée aux matériaux DFC. Cette deuxième méthode s'appuie sur une modélisation de l'enchevêtrement des copeaux, à l'aide de copeaux flexibles en deux dimensions correspondant à des surfaces. La forme des copeaux ou chips est pilotée par un ensemble de nœuds pilotes. L'interpénétration est ainsi gérée à l'aide d'algorithmes d'attraction/répulsion directement sur les nœuds-pilotes afin d'obtenir une solution optimum. Les surfaces des copeaux sont ensuite noyées dans un maillage du volume. L'interpénétration et l'écartement entre les copeaux au sein du volume ne sont donc pas gérés strictement.

Cette deuxième méthode est donc éloignée de la réalité et elle n'est pas directement utilisable pour la prédiction de la rupture, faisant intervenir les contraintes interlaminaires à la surface des chips, la méthode ne permettant pas leurs évaluations.

Une troisième méthode est exposée dans le document de Y. Pan et al. intitulé « Numerical generation of a random chooped fiber composite RVE and its elastic properties », Composite Science and Technology 68, pages 2792-2798, 2008.

Cette troisième méthode s'appuie sur le tirage aléatoire d'éléments de fibre de même taille ayant une forme de cylindres elliptiques droits (i.e. torons), qui sont empilés pour remplir un volume élémentaire de résine. Selon cette troisième méthode, lorsqu'on détecte une intersection entre un nouvel élément de fibre et un élément de fibre déjà positionné dans le volume, le nouvel élément de fibre est déformé, et plus précisément déformé en un unique « créneau » (i.e. courbé, incliné, à ses deux extrémités selon des directions symétriques) pour tenir compte de la présence de l'élément déjà positionné. Pan et al. considèrent ainsi deux types d'éléments de fibre pour remplir le volume, à savoir des éléments de fibre droits et des éléments de fibre en créneau, ces derniers n'étant pas représentatifs de la réalité.

L'inclinaison d'un élément de fibre est tout d'abord modélisée en deux dimensions (2D) dans un plan longitudinal de l'élément de fibre, comme illustré schématiquement à la **figure 2****.** Sur cette figure, les références A et B désignent deux éléments de fibre initialement droits, caractérisés par un point d'intersection IB situé au niveau de la couche de fibre FL-INF occupée par l'élément B. Conformément à la modélisation 2D adoptée, le point IB est translaté verticalement en un point IA situé au niveau de la couche de fibre supérieure FL-SUP. Les couches de fibre FL-INF et FL-SUP sont séparées par une couche de résine ML. Deux points supplémentaires S1 et S2, respectivement S1' et S2', sont ajoutés de part et d'autre du point IA au niveau des couches de fibre FL-SUP et FL-INF pour modéliser l'inclinaison de l'élément de fibre A. La section elliptique de l'élément de fibre est maintenue en l'état. Les points S1, S2 et S1', S2' sont en outre choisis de sorte à garantir un espacement minimal entre les éléments de fibre au sein du volume. L'élément de fibre incliné A est ensuite reconstruit en trois dimensions (3D) en balayant l'espace autour de son axe longitudinal.

Pour faciliter la discrétisation du volume élémentaire VER reconstruit selon cette troisième méthode, et plus généralement son implémentation, des espaces importants entre les éléments de fibre empilés sont considérés, ce qui limite le taux de remplissage du VER pouvant être atteint avec cette méthode.

Il existe donc un besoin d'un procédé de reconstruction numérique d'un volume élémentaire représentatif d'un matériau composite conduisant à un fort taux de remplissage et pouvant s'adapter à différents types de matériau composite, et notamment, aux matériaux composites DFC.

### Objet et résumé de l'invention

La présente invention répond notamment à ce besoin et propose une méthode de reconstruction d'un volume élémentaire représentatif d'un matériau composite, recréant l'enchevêtrement aléatoire des copeaux de fibre tout en assurant un fort taux de remplissage (typiquement supérieur à 90%), et permettant la prédiction des propriétés mécaniques du matériau par homogénéisation numérique.

L'invention s'applique ainsi de façon privilégiée mais non limitative aux matériaux composites DFC. Elle peut toutefois s'appliquer à d'autres types de matériaux composites, comme par exemple des matériaux BMC (pour Bulk Molding Compound en anglais) ou SMC (pour Sheet Molding Compound en anglais) obtenus à partir d'une résine de polyester renforcée par des fibres de verre coupées couramment utilisés dans les industries automobile et électrique.

L'invention est définie dans les revendications indépendantes.

Plus précisément, l'invention vise un procédé de reconstruction numérique d'un volume élémentaire représentatif d'une microstructure de matériau composite, ce procédé comprenant :
- une étape de définition d'un volume élémentaire ;
- une étape de remplissage du volume élémentaire défini avec une pluralité d'éléments numériques modélisant des éléments de fibres du matériau composite, chaque élément numérique s'étendant longitudinalement selon un axe principal, cette étape de remplissage comprenant :
   o une étape d'association à chaque élément numérique d'une position dans un plan déterminé de l'espace et d'une orientation de son axe principal dans ce plan ; et
   o une étape de positionnement successif de chaque élément numérique dans le volume élémentaire, en conformité avec la position et l'orientation qui lui ont été associées, cette étape de positionnement comprenant une mise en contact de l'élément numérique avec au moins une paroi du volume élémentaire et/ou au moins un élément numérique précédemment positionné, et une adaptation géométrique de l'élément numérique à ladite au moins une paroi et/ou audit au moins un élément numérique précédemment positionné avec lesquels il est mis en contact,
au moins une portion d'un élément numérique utilisé pour remplir le volume élémentaire subissant, lors de l'adaptation géométrique, une déformation autre qu'une inclinaison de son axe longitudinal par rapport à l'axe principal de cet élément numérique.

Corrélativement, l'invention concerne aussi un dispositif de reconstruction numérique d'un volume élémentaire représentatif d'une microstructure de matériau composite, ce dispositif comprenant :
- un module de définition d'un volume élémentaire ;
- un module de remplissage apte à remplir le volume élémentaire défini avec une pluralité d'éléments numériques modélisant des éléments de fibres du matériau composite, chaque élément numérique s'étendant longitudinalement selon un axe principal, ce module de remplissage étant apte à :
   o associer à chaque élément numérique une position dans un plan déterminé de l'espace et une orientation de son axe principal dans ce plan ; et
   o à positionner successivement chaque élément numérique dans le volume élémentaire, en conformité avec la position et l'orientation qui lui ont été associées, le module de remplissage étant apte lors de ce positionnement à mettre en contact l'élément numérique avec au moins une paroi du volume élémentaire et/ou au moins un élément numérique précédemment positionné, et à adapter géométriquement l'élément numérique à ladite au moins une paroi et/ou audit au moins un élément numérique précédemment positionné avec lesquels il est mis en contact,
au moins une portion d'un élément numérique utilisé pour remplir le volume élémentaire subissant, lors de l'adaptation géométrique, une déformation autre qu'une inclinaison de son axe longitudinal par rapport à l'axe principal de cet élément numérique.

Par adaptation géométrique, on entend au sens de l'invention que la forme de l'élément numérique considéré est modifiée le cas échéant de sorte à s'adapter à l'empreinte de ladite au moins une paroi et/ou audit au moins un élément numérique précédemment positionné avec lesquels l'élément numérique considéré est mis en contact.

Autrement dit, lors de l'étape de positionnement de chaque élément numérique dans le volume élémentaire, on prend en compte de façon géométrique, en adaptant la forme de l'élément numérique, les contacts de ce dernier avec les éléments numériques précédemment positionnés, et/ou les parois du volume élémentaire. En particulier, on adapte la forme de l'élément numérique aux éléments déjà positionnés amenés à être en contact en tout ou partie avec l'élément numérique et se trouvant en dessous de celui-ci, et/ou à la paroi inférieure du volume élémentaire (c'est-à-dire la paroi du bas ou du fond du volume sur laquelle on vient positionner les éléments).

La méthode de reconstruction proposée par l'invention consiste donc à remplir progressivement un volume avec des éléments de fibre de forme prédéterminée (ex. copeaux parallélépipédiques) mis en contact les uns avec les autres, et qui ne sont pas rigides mais qui ont au contraire la faculté de pouvoir s'adapter de manière « naturelle » et réaliste à l'empilement des éléments de fibre préalablement placés. Cette mise en contact et cette adaptation géométrique des éléments de fibre permettent avantageusement de limiter efficacement la présence de vide entre les éléments de fibre positionnés dans le volume. A cet effet, l'invention ne se limite pas à une déformation des éléments de fibre selon une section orthogonale à l'axe longitudinal de ces éléments comme dans l'art antérieur (autrement dit à une inclinaison de l'axe longitudinal de l'élément de fibre selon une unique direction orthogonal à celui-ci), mais autorise également d'autres déformations, comme par exemple une rotation de l'axe principal de l'élément de fibre sur certaines portions, etc. Aucune limitation n'est attachée *a priori* au type de déformations pouvant être envisagées. En particulier, la section des éléments numériques peut changer de forme librement contrairement à l'état de la technique. On peut ainsi atteindre des taux de remplissage volumique en fibres proches de 100%.

Grâce à cette méthode, il est donc possible de créer des volumes élémentaires qui sont représentatifs de différentes structures de matériaux composites, et en particulier des structures DFC qui ont un fort taux volumique de fibres. Ces VER peuvent ensuite être associés de manière classique à un calcul par éléments finis pour estimer les réponses des microstructures ainsi modélisées à différents types de chargement mécanique (cisaillements, tractions, etc.). L'invention offre ainsi un outil permettant d'estimer aisément les relations entre des microstructures réelles de matériaux composites et des propriétés mécaniques mesurées lors du chargement de ces microstructures.

Elle permet en outre d'analyser plus facilement les causes de variabilité des performances mécaniques observées sur pièces et/ou par éprouvette, et en particulier les effets d'échelle, en considérant et en comparant par exemple plusieurs volumes élémentaires représentatifs d'un même matériau composite reconstruits grâce à l'invention.

Il convient de noter que l'invention ne se limite pas à une forme d'élément de fibre particulière, telle que par exemple à des copeaux parallélépipédiques. L'invention offre par conséquent également un outil d'optimisation de la fabrication de matériaux composites en permettant d'évaluer facilement différentes formes, dimensions et types d'éléments de fibre.

Dans un mode particulier de réalisation, le procédé de reconstruction comprend une étape de discrétisation du volume élémentaire et de chaque élément numérique de façon uniforme en une pluralité de voxels.

De cette sorte, l'invention réalise simultanément la reconstruction et la discrétisation du VER.

Cette étape de discrétisation est réalisée préférentiellement avant le remplissage du volume élémentaire défini. De cette sorte, la mise en contact et l'adaptation géométrique d'un élément numérique peuvent être avantageusement mises en œuvre en traitant séparément chaque voxel de cet élément numérique (par exemple, les voxels sont traités indépendamment les uns des autres), ce qui facilite l'implémentation de ces opérations. En effet, on évite ainsi le recours à des considérations géométriques complexes pour adapter la forme d'un élément numérique aux empreintes de la paroi ou des éléments numériques précédemment positionnés dans le volume tout en offrant la possibilité de minimiser les vides entre les éléments. L'adaptation géométrique peut être réalisée voxel par voxel ce qui offre un large éventail de déformations possibles de chaque élément numérique, difficiles voire impossibles à modéliser numériquement sinon.

En variante, la discrétisation du VER peut être réalisée après reconstruction de celui-ci, par exemple par un maillage en éléments finis, connu de l'homme du métier.

Dans un mode particulier de réalisation, l'adaptation géométrique comprend le positionnement d'au moins deux sous-ensembles de voxels de l'élément numérique dans des plans de l'espace décalés verticalement l'un par rapport à l'autre.

Ces plans de l'espace sont préférentiellement parallèles au plan déterminé de l'espace considéré lors de l'étape d'association, ce plan déterminé pouvant être choisi par exemple parallèle à la paroi inférieure du volume élémentaire sur laquelle on vient positionner les éléments numériques. Ils peuvent être séparés d'un ou de plusieurs voxels, afin de s'adapter à différentes configurations d'empilement d'éléments numériques. En outre, on peut envisager de positionner des sous-ensembles de voxels dans plus de deux plans de l'espace distincts de sorte à adapter l'élément numérique à l'empreinte de plusieurs éléments numériques.

Par exemple, un premier plan de l'espace dans lequel est positionné un premier sous-ensemble de voxels de l'élément numérique considéré est un plan situé au-dessus des voxels d'un élément numérique déjà positionné avec lequel l'élément numérique considéré est mis en contact, tandis qu'on positionne un deuxième sous-ensemble de voxels de l'élément numérique dans un deuxième plan de l'espace présentant des voxels libres autrement dit non occupés par un élément numérique déjà positionné ou par la paroi du volume élémentaire, et qui va ainsi permettre de modéliser au plus proche de la réalité une déformation d'une partie de l'élément numérique (les éléments numériques restent bien distincts après leur positionnement en contact les uns avec les autres). Par exemple, au moins un voxel d'un dit sous-ensemble peut être en contact avec un voxel d'un élément numérique déjà positionné ou avec la paroi du volume élémentaire.

En fonction de la longueur de la ou des portions de l'élément numérique amenée(s) à être déformée(s) et des éléments déjà positionnés et/ou de la paroi du volume élémentaire, on peut envisager le positionnement de plusieurs voxels de l'élément numérique dans plusieurs plans décalés verticalement par rapport au premier plan (se trouvant notamment en dessous du premier plan) ou au contraire dans un seul plan.

Pour identifier au moins un plan de l'espace dans lequel est positionné un dit sous-ensemble de voxels, le procédé comprend préférentiellement une étape de vérification de l'existence d'au moins un voxel dans ce plan aligné verticalement avec un voxel dudit sous-ensemble et non occupé par un voxel d'un élément numérique précédemment positionné ou par la paroi du volume élémentaire.

Dans un mode particulier de réalisation, le procédé comprend en outre une étape d'insertion d'au moins un voxel de liaison entre les deux sous-ensembles de voxels.

L'insertion de ce voxel de liaison permet de préserver une continuité de l'élément de fibre en dépit de la déformation subie (i.e. pas de coupure de l'élément de fibre en raison de la déformation). Ceci permet d'obtenir un volume élémentaire représentatif plus réaliste de la microstructure du matériau composite reflétant les différents « chemins » d'effort présents dans le matériau en raison de l'enchevêtrement des éléments de fibre.

Toutefois, l'insertion d'un ou de voxel(s) de liaison augmente artificiellement la longueur de l'élément de fibre considéré, ce qui peut influencer la réponse du VER aux différents chargements qui lui sont imposés. Aussi, dans un mode particulier de réalisation, si les plans de l'espace sont amenés à être décalés verticalement d'un nombre supérieur à un nombre prédéterminé de voxels, l'élément numérique est supprimé du volume élémentaire, autrement dit, il n'est pas pris en compte pour le remplissage du volume élémentaire.

Il convient de noter qu'il se peut qu'un vide résulte de la suppression de cet élément numérique et qu'aucun élément numérique tiré ultérieurement ne permette de combler ce vide. Ce vide sera associé à de la résine lors du chargement du VER.

En outre, ce mode de réalisation permet indirectement de piloter le taux de fibres hors plan (alors que lors de l'étape d'association, on contrôle l'angle dans le plan des différents éléments de fibre).

Dans un autre mode de réalisation de l'invention, le procédé comprend en outre une étape de régularisation de la surface d'au moins un élément numérique mis en contact avec un élément numérique précédemment positionné dans le volume élémentaire et dont au moins une portion a subi une déformation lors de l'adaptation géométrique, cette régularisation étant effectuée au niveau de la déformation.

Cette régularisation comprend par exemple, lorsque l'élément numérique est discrétisé en une pluralité de voxels, une troncature d'au moins un voxel de ladite au moins une portion ayant subi une déformation (ou de la portion complétée par un ou plusieurs voxels de liaison) selon un plan diagonal au voxel.

Cette étape de troncature permet d'obtenir un modèle plus proche de la réalité physique de la microstructure en se rapprochant de la forme réelle de l'élément de fibre après déformation et en limitant les concentrations de contraintes créées par des fibres hors plan.

Dans un autre mode de réalisation, le procédé comprend en outre une étape de post-traitement du volume élémentaire comprenant l'insertion entre au moins deux éléments numériques mis en contact dans le volume élémentaire d'un élément d'interface de dimension prédéterminée.

Ces éléments d'interface sont préférentiellement de faible épaisseur. Ils permettent de modéliser les phénomènes de décohésion entre les éléments de fibre.

A cet effet, on leur attribue lors du chargement du VER des propriétés particulières qui permettent de simuler une rupture le cas échéant du matériau composite, par exemple sous l'effet d'un cisaillement dans le plan. Ces propriétés particulières peuvent être proches des propriétés de la résine, et adaptée pour que l'estimation de la réponse du VER soit aussi proche que possible de la réponse d'un échantillon réel. Ces propriétés particulières sont préférentiellement isotropes.

Dans un mode particulier de réalisation, les positions associées aux éléments numériques au cours de l'étape d'association sont sélectionnées suivant une distribution spatiale uniforme, cette distribution uniforme étant ajustée, sur détection d'un événement prédéterminé, en fonction de la distribution spatiale des éléments numériques précédemment positionnés.

L'événement qui peut déclencher un ajustement de la distribution des positions associées aux éléments numériques peut être par exemple la détection de l'attribution successive d'un nombre de positions situées dans un même secteur limité de l'espace à différents éléments numériques. Une telle attribution peut induire des difficultés à remplir le volume élémentaire avec les éléments numériques associés à ces positions (présence de vides, espacement vertical entre les sous-ensembles de voxels d'un même élément numérique après adaptation géométrique supérieur à un seuil prédéterminé, etc.).

L'ajustement de la distribution permet de se ramener à une situation proche de ce qu'il se passe physiquement lors de la fabrication du matériau composite et donc de l'enchevêtrement des éléments de fibre au sein du matériau.

En variante, on peut envisager une distribution spatiale différente d'une distribution uniforme afin d'attribuer une orientation préférentielle aux éléments numériques.

Dans un mode particulier de réalisation, les différentes étapes du procédé de reconstruction sont déterminées par des instructions de programmes d'ordinateurs.

En conséquence, l'invention vise aussi un programme d'ordinateur sur un support d'informations, ce programme étant susceptible d'être mis en œuvre dans un dispositif de reconstruction ou plus généralement dans un ordinateur, ce programme comportant des instructions adaptées à la mise en œuvre des étapes d'un procédé de reconstruction tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1, déjà décrite, représente sous forme d'ordinogramme une méthode d'homogénéisation de l'état de la technique ;
- la figure 2, déjà décrite, illustre schématiquement une méthode de reconstruction d'un volume élémentaire représentatif d'un matériau composite de l'état de la technique ;
- la figure 3 représente un dispositif de reconstruction d'un volume élémentaire représentatif d'une microstructure de matériau composite conforme à l'invention dans un mode particulier de réalisation ;
- la figure 4 représente schématiquement l'architecture matérielle du dispositif de reconstruction de la figure 3 ;
- la figure 5 illustre, sous forme d'ordinogramme, les différentes étapes d'un procédé de reconstruction selon l'invention telles qu'elles sont mises en œuvre par le dispositif de reconstruction de la figure 3 ;
- les figures 6A-6D illustrent des exemples de positionnement d'éléments numériques conformément à l'invention ;
- la figure 7 représente un élément numérique dans un plan (X,Y) de l'espace avant son positionnement dans le volume élémentaire par le dispositif de reconstruction ; et
- les figures 8A-8C illustrent un exemple d'adaptation géométrique d'un élément numérique lors du procédé de reconstruction.

### Description détaillée de l'invention

La **figure 3** représente, dans son environnement, un dispositif 1 de reconstruction d'un volume élémentaire représentatif (VER) 2 d'une microstructure de matériau composite, conforme à l'invention, dans un mode particulier de réalisation. De façon connue, un volume élémentaire représentatif d'un matériau composite est une entité géométrique représentative statistiquement de la microstructure du matériau composite, c'est-à-dire modélisant cette microstructure.

Dans l'exemple envisagé ici, on considère un matériau composite 3 de type DFC, autrement dit, à fibres longues discontinues, fabriqué à partir de copeaux ou « chips » de fibre enchevêtrés aléatoirement et pré-imprégnés d'une résine thermodurcissable (matrice). Les chips sont par exemple des copeaux de fibre de verre ou de carbone imprégnés d'une résine de carbone, et qui ont une forme sensiblement parallélépipédique.

Toutefois, bien entendu, l'invention s'applique à d'autres matériaux composites constitués d'éléments de fibre pré-imprégnés d'une résine.

Comme mentionné précédemment, la reconstruction numérique d'un volume élémentaire représentatif du matériau composite 3 est avantageuse en ce qu'elle permet l'utilisation de méthodes numériques d'homogénéisation, telles que décrites précédemment en référence à la figure 1, pour estimer les propriétés mécaniques et élastiques en tout point de ce matériau et en déduire ses performances. Ces performances dépendent directement de l'enchevêtrement des copeaux de fibres lors de la fabrication du matériau.

Dans le mode de réalisation décrit ici, le dispositif de reconstruction 1 est un ordinateur dont l'architecture matérielle est illustrée schématiquement à la **figure 4****.**

Il comprend notamment un processeur 4, des mémoires 5-7 (par exemple, une mémoire morte et/ou un disque dur 5, une mémoire vive 6 et une mémoire non volatile 7), et des moyens de communication 8. Ces moyens de communication 8 comprennent notamment des moyens d'entrée/sortie (ex. souris, clavier, écran, etc.) permettant à un utilisateur ou un opérateur d'interagir avec le dispositif de reconstruction 1 pour spécifier par exemple certaines paramètres. Ils intègrent également une ou plusieurs interfaces de communication (ex. port USB (Universal Serial Bus), carte réseau, etc.).

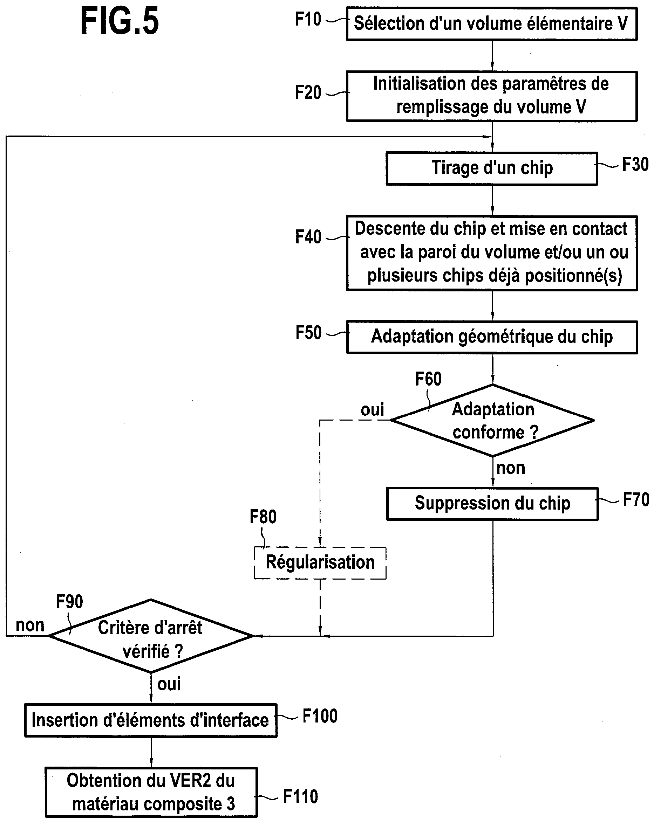

La mémoire morte et/ou le disque dur 5 constitue un support d'enregistrement lisible par le processeur 4 du dispositif de reconstruction 1 et sur lequel est enregistré un programme d'ordinateur conforme à l'invention, comportant des instructions pour l'exécution des étapes d'un procédé de reconstruction d'un VER d'une microstructure du matériau composite 3 selon l'invention, les étapes de ce procédé étant décrites ultérieurement en référence à la figure 5, dans un mode particulier de réalisation.

Ce programme d'ordinateur définit de façon équivalente des modules fonctionnels du dispositif de reconstruction 1 (à savoir des modules logiciels ici), tels qu'un module 1A de définition d'un volume élémentaire et un module 1B de remplissage de ce volume élémentaire pour reconstruire le VER 2. Les fonctions de ces deux modules sont décrites plus en détail en référence aux étapes du procédé de reconstruction décrites maintenant.

La **figure 5** représente les principales étapes du procédé de reconstruction selon l'invention, dans un mode particulier de réalisation dans lequel elles sont mises en œuvre par le dispositif de reconstruction 1 représenté à la figure 1 et conduisent à la reconstruction du volume élémentaire représentatif 2 du matériau composite 3.

Dans la suite de la description, pour mieux illustrer l'invention, on considère un repère de l'espace noté (X,Y,Z).

Un volume élémentaire V destiné à modéliser la microstructure du matériau composite est tout d'abord défini par le module de définition 1A du dispositif de reconstruction 1 (étape F10). Ce volume élémentaire V est défini par exemple à partir d'informations fournies via les moyens d'entrée/sortie 8 du dispositif de reconstruction 1 par un utilisateur ou un opérateur, comme par exemple une sélection opérée par cet utilisateur parmi un ensemble de volumes élémentaires prédéfinis (ex. cube, parallélépipède, cylindre, ou autres formes plus complexes).

Cette étape F10 de définition consiste non seulement en le choix de la forme du volume élémentaire V mais également en la définition de ses dimensions. On suppose ici que le volume élémentaire V est un parallélépipède, dont les parois supérieure et inférieure sont choisies parallèles au plan (X,Y) par souci de simplification.

En variante, il est possible de choisir un volume élémentaire différent d'un parallélépipède tel qu'une portion de sphère, de cylindre ou un coin. Le plan (X,Y) peut en outre être choisi de manière particulière pour favoriser une orientation en fonction des surfaces du volume. Par exemple, il peut être intéressant d'évaluer un coin dont le plan (X,Y) est orienté selon la perpendiculaire de la bissectrice du dièdre formé par les deux surfaces principales du coin.

Les dimensions du parallélépipède V doivent répondre à un compromis précision versus complexité : elles doivent être en effet suffisamment grandes pour qu'il contienne un nombre d'éléments de fibres important et que les propriétés dérivées du VER 2 représentent les propriétés réelles au niveau macroscopique du matériau composite 3, tout en conduisant à une complexité acceptable pour les opérations et les calculs menés lors de la reconstruction du volume élémentaire et son chargement.

Des dimensions du volume élémentaire V vérifiant un tel compromis sont, dans le mode de réalisation décrit ici, déterminées préalablement par expérimentation et stockées dans une mémoire du dispositif de reconstruction 1 (par exemple dans la mémoire non volatile 7), pour être utilisées par le module de définition 1A lors de l'étape F10 de définition du volume élémentaire V.

En variante, ces dimensions peuvent être fournies par l'utilisateur au module de définition 1A via les moyens de communication 8.

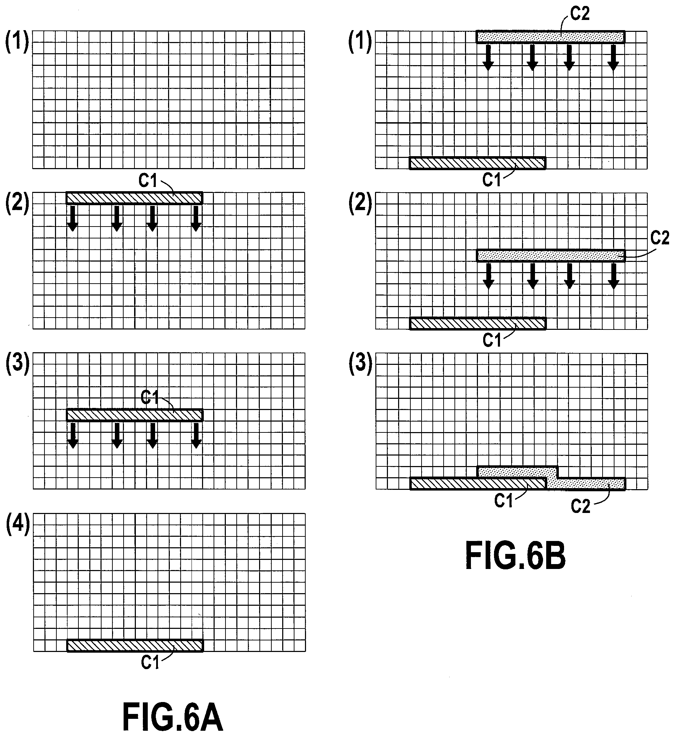

Dans le mode de réalisation décrit ici, le volume élémentaire V est ensuite discrétisé de façon uniforme sous la forme d'une pluralité de voxels, résultant ainsi en une « grille » de voxels. Une telle grille est représenté en deux dimensions sur la **figure 6A****(1),** dans le plan (X,Z). La résolution utilisée pour la discrétisation du volume élémentaire V (i.e. taille des voxels) peut être prédéterminée ou être fournie par l'utilisateur du module de définition 1A par le biais des moyens de communication 8 du dispositif de reconstruction 1.

Conformément à l'invention, le volume élémentaire V ainsi défini par le module de définition 1A est rempli avec une pluralité d'éléments numériques C1, C2,..., CN, modélisant les copeaux de fibre du matériau composite 3, N désignant un entier supérieur à 1. Pour faciliter la compréhension de l'invention, on désigne indifféremment ces éléments numériques par « chips » ou par « éléments numériques ».

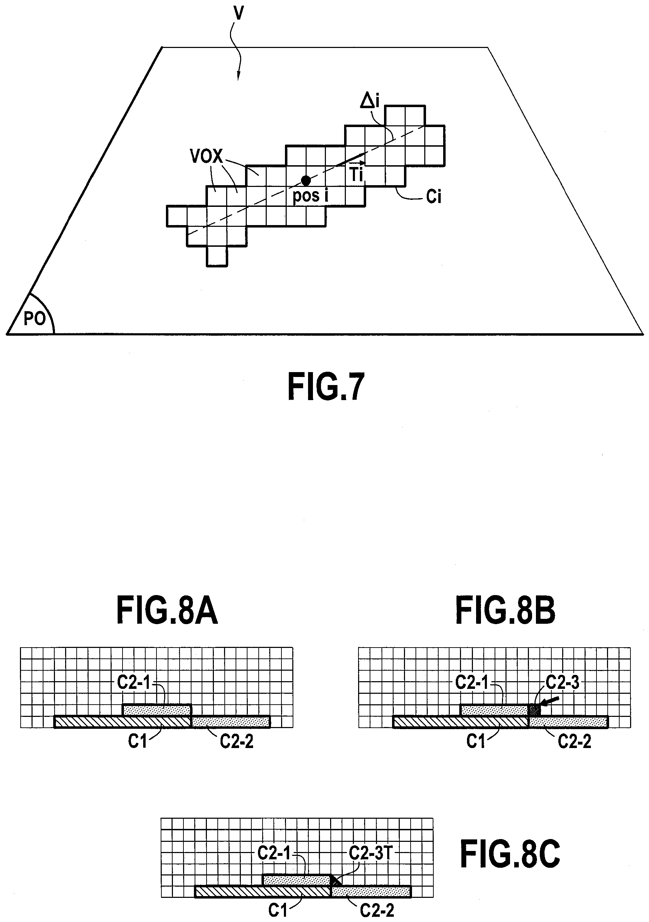

Les éléments numériques C1,...,CN sont choisis de sorte à approcher la forme des copeaux de fibre utilisés pour fabriquer le matériau composite 3. Dans l'exemple envisagé ici, et comme illustré à la **figure 7** dans le plan (X,Y), il s'agit de parallélépipèdes, discrétisés en une pluralité de voxels. Chacune des faces d'un élément numérique Ci est constituée d'un nombre entier de voxels VOX ayant la même taille que les voxels du volume élémentaire V, pour pouvoir aisément s'inscrire dans la grille résultant de la discrétisation du volume élémentaire V. Chaque élément numérique Ci, i=1,...,N s'étend selon un axe longitudinal dit principal Δi. Cet axe est choisi parallèle à la paroi inférieure du volume V, autrement dit au plan (X,Y).

Préalablement au remplissage du volume V avec les éléments numériques C1,...,CN, le module de définition 1A procède à l'initialisation de différents paramètres de remplissage du volume V (étape F20).

Cette initialisation comprend notamment ici la définition et/ou le choix des dimensions de chaque élément numérique Ci, i=1,...,N modélisant un copeau de fibre, à savoir ici sa longueur, sa largeur et son épaisseur. Ces dimensions sont choisies ici identiques pour tous les éléments numériques. On suppose par exemple que chaque élément numérique modélisant un chip a une épaisseur d'un voxel, et des largeur et longueur prédéterminées.

En variante, l'utilisateur peut choisir, par l'intermédiaire des moyens de communication 8, la largeur et/ou la longueur et/ou l'épaisseur des éléments numériques utilisés pour remplir le volume V, et/ou spécifier des dimensions différentes pour différents éléments numériques.

Conformément à l'invention, le remplissage du volume V est réalisé en empilant plusieurs éléments numériques C1,...,CN modélisant les copeaux de fibre du matériau composite 3. Pour modéliser le caractère aléatoire de l'enchevêtrement des copeaux de fibre dans le matériau composite, les positions de ces éléments numériques dans le plan (X,Y) ainsi que leurs orientations dans ce plan sont choisies aléatoirement en respectant une loi de distribution donnée.

Ainsi, l'étape d'initialisation F20 comprend également :
- la définition d'un tenseur d'orientation des éléments numériques C1,...,CN, ou de façon équivalente d'une loi de distribution des orientations des différents éléments numériques dans le plan (X,Y) ; et
- d'une loi de distribution des positions des éléments numériques dans le plan (X,Y). Dans l'exemple envisagé ici, les positions attribuées aux éléments numériques dans le plan (X,Y) sont tirées aléatoirement selon une distribution uniforme définie sur le plan caractérisant la paroi supérieure du volume élémentaire V. On note dans la suite de la description ce plan P0.

Suite à cette étape d'initialisation, le module de remplissage 1B du dispositif de reconstruction 1 procède au remplissage du volume élémentaire V.

A cet effet, le module de remplissage 1B utilise la pluralité d'éléments numériques Ci, i=1,...,N mentionnés précédemment, qu'il vient positionner successivement dans le volume élémentaire V en respectant des contraintes ou règles de positionnement prédéterminées.

Plus spécifiquement et comme illustré à la figure 7, le module de remplissage 1B associe tout d'abord à chaque élément numérique considéré Ci, i=1,...,N, une position POSi de son centre dans le plan P0 et une orientation de son axe principal Δi (définie par un vecteur T̅ₗ̅), tirées aléatoirement conformément aux lois de distribution définies lors de l'étape d'initialisation F20 (étape F30).

Puis les éléments numériques sont positionnés successivement dans le volume V, un par un, en tenant compte des éléments numériques précédemment positionnés : en d'autres mots, lorsque le module de remplissage 1B positionne un élément numérique courant Ci, il prend en compte les i-1 éléments numériques C1,...,Ci-1, précédemment positionnés dans ce volume.

L'élément numérique courant Ci est ainsi positionné dans le volume V en conformité avec (i.e. en respectant) la position POSi et l'orientation T̅ₗ̅ qui lui ont été associées (étape F40).

Dans le mode de réalisation décrit ici, ce positionnement se traduit par une « descente » itérative verticale de l'élément numérique Ci (i.e. selon l'axe Z) dans la grille de voxels définissant le volume élémentaire V, selon un pas de descente prédéterminé. On choisit ici un pas de descente égal à un voxel à chaque itération pour plus de précision.

Cette descente est effectuée depuis le plan P0 jusqu'à la mise en contact de l'élément numérique courant Ci avec la paroi inférieure du volume élémentaire V et/ou avec un ou plusieurs élément(s) numérique(s) Cj, j=1,...,i-1 déjà positionné(s) dans le volume V et se trouvant en dessous de tout ou partie de l'élément numérique Ci. Dans le mode de réalisation décrit ici, lors de cette descente, les voxels de l'élément numérique sont traités séparément par le module de remplissage 1B un par un (c'est-à-dire indépendamment les uns des autres), pour faciliter l'implémentation du positionnement de l'élément numérique dans le volume V.

Lorsque le module de remplissage 1B détecte qu'un élément numérique courant Ci entre en intersection lors de cette descente avec la paroi inférieure du volume élémentaire V et/ou un ou plusieurs éléments numériques précédemment positionnés dans le volume V, il est configuré conformément à l'invention pour adapter géométriquement la forme de l'élément numérique courant Ci à l'empreinte des objets (paroi ou élément(s) numérique(s)) avec lesquels il est mis en contact, et ce en vue de compléter l'espace disponible du volume V (étape F50). Autrement dit l'élément numérique courante Ci est adapté de façon géométrique aux contacts existant avec les éléments précédemment positionnés ou avec la paroi du volume élémentaire V.

Cette adaptation géométrique est réalisée de sorte à minimiser les vides entre l'élément numérique courant Ci après déformation et les objets avec lesquels il est mis en contact. Elle est mise en œuvre ici par le module de remplissage 1B voxel par voxel, ce qui offre la possibilité de réaliser aisément différents types de déformations géométriques de l'élément numérique courant Ci et de s'adapter précisément à l'empreinte des objets déjà positionnés dans le volume V.

Plus précisément, lors du traitement d'un voxel VOX de l'élément numérique courant Ci, le module de remplissage 1B détermine s'il peut faire descendre ce voxel verticalement d'un niveau équivalent au pas de descente, autrement dit, si l'emplacement que prendrait le voxel suite à cette descente est libre et n'est pas occupé par le voxel d'un élément numérique Cj précédemment positionné ou par la paroi inférieure du volume V.

Dans le mode de réalisation décrit ici, si un élément numérique comprend une portion amenée à être en contact avec une paroi latérale du volume V (et à la traverser), celle-ci est sectionnée, autrement dit, les voxels correspondant à cette portion ne sont pas considérés.

Si le module de remplissage 1B détecte la présence de la paroi inférieure du volume V ou d'un voxel d'un autre élément numérique Cj à cet emplacement, le voxel VOX est maintenu à son niveau précédent, autrement dit il est maintenu au-dessus du voxel occupé par l'élément numérique Cj, en contact avec ce voxel de l'élément numérique Cj.

Sinon, le voxel VOX est descendu d'un voxel.

Cette opération est mise en œuvre par le module de remplissage 1B pour chaque voxel de l'élément numérique Ci.

Les **figures 6A à 6D** illustrent schématiquement en deux dimensions, dans le plan (X,Z), le positionnement et l'adaptation géométrique de différents éléments numériques C1 à C4.

Les figures 6A(1) à 6A(4) représentent le positionnement dans le volume V d'un premier élément numérique C1, à différentes itérations de la descente de l'élément numérique C1. Le volume V ne contient sur la figure 6A(1) aucun autre élément numérique précédemment positionné, et l'élément numérique C1 est mis en contact avec la paroi inférieure du volume V comme illustré sur la figure 6A(4). Autrement dit ici, l'adaptation géométrique consiste en le maintien de l'élément numérique C1 en l'état (pas de déformation géométrique de l'élément).

Les figures 6B(1) à 6B(3) représentent le positionnement dans le volume V d'un deuxième élément numérique C2, à différentes itérations de la descente de l'élément numérique C2. Le volume V contient sur la figure 6B(1) l'élément numérique C1 précédemment positionné.

Lors de sa descente, l'élément C2 est mis en contact avec une portion de la paroi inférieure du volume V comme illustré sur la figure 6B(3), et avec une portion de l'élément numérique C1. Lors de cette mise en contact, la forme géométrique de l'élément C2 est adaptée à l'empreinte géométrique de la paroi et de la portion de l'élément numérique C1 avec lesquelles l'élément C2 est mis en contact.

La **figure 8** illustre plus précisément comment est réalisée cette adaptation dans le mode particulier de réalisation décrit ici.

Du fait du traitement décrit précédemment réalisé voxel par voxel, deux sous-ensembles de voxels distincts désignés sur la figure 8A par C2-1 et C2-2 sont positionnés à des niveaux différents de la grille du volume élémentaire V, autrement dit, dans des plans de l'espace décalés verticalement l'un par rapport à l'autre, à savoir ici d'un voxel (ce nombre dépend toutefois de la configuration des éléments numériques déjà positionnés). Ce positionnement sur deux niveaux correspond à une déformation géométrique de l'élément numérique et traduit sous forme discrète la déformation du copeau de fibre lors de la fabrication du matériau pour s'adapter à la présence d'autres copeaux de fibre.

Il convient toutefois de noter qu'en l'état sur la figure 8A il existe une discontinuité entre les deux sous-ensembles C2-1 et C2-2. Cette discontinuité ne correspond à aucun phénomène physique réel dans l'enchevêtrement des éléments de fibre du matériau composite 3. Aussi, dans le mode de réalisation décrit ici, pour assurer une continuité de l'élément numérique C2 après déformation, un voxel de liaison C2-3 est inséré entre les deux sous-ensembles comme illustré à la figure 8B.

En variante, si les deux sous-ensembles C2-1 et C2-2 sont décalés verticalement de plus d'un voxel, plusieurs voxels de liaison C2-3 peuvent être insérés pour relier les deux sous-ensembles.

L'insertion d'un ou de plusieurs voxels de liaison augmente artificiellement la longueur de l'élément numérique C2. Cette augmentation peut influencer le comportement mécanique du VER en réponse à certains chargements si elle n'est pas négligeable par rapport à la longueur de l'élément.

Afin de limiter cette influence, dans le mode de réalisation décrit ici, le module de remplissage 1B détermine après avoir adapté géométriquement l'élément numérique C2 si cette adaptation est conforme à un critère prédéterminé en relation avec l'augmentation de la longueur de l'élément numérique C2 (étape F60).

Si l'adaptation n'est pas conforme à ce critère (réponse non au test de l'étape F60), alors le module de remplissage 1B supprime l'élément numérique C2, autrement dit, celui-ci ne contribue pas au remplissage du volume V (étape F70).

Le critère peut revêtir différentes formes. Dans l'exemple illustré à la figure 8, il peut s'agir notamment de déterminer si les plans de l'espace dans lesquels se trouvent les deux sous-ensembles de voxels C2-1 et C2-2 sont décalés verticalement d'un nombre de voxels supérieur à un nombre prédéterminé, l'élément numérique C2 étant supprimé le cas échéant. Ce nombre prédéterminé peut être choisi par exemple égal à 1.

Il peut en variante dépendre de la longueur initiale de l'élément numérique C2 avant déformation.

Bien entendu d'autres critères peuvent être envisagés, comme par exemple la comparaison de la longueur de l'élément C2 avant et après déformation, etc.

On note que l'ajout de l'étape F60 et d'un critère de conformité de l'adaptation géométrique offrent un levier sur les propriétés hors plan du matériau composite 3 (c'est-à-dire ici sur les propriétés du matériau se manifestant dans un plan distinct du plan (X,Y)), bien que non prévu explicitement par les hypothèses de tirage des éléments numériques utilisées par le procédé de reconstruction selon l'invention (i.e. tirage d'une position et d'une orientation dans le plan (X,Y)). Grâce à cette étape, on contrôle en effet également par le biais du procédé de reconstruction selon l'invention le taux d'éléments de fibre (i.e. d'éléments numériques) empilés hors plan.

Si l'adaptation géométrique réalisée à l'étape F50 est conforme au critère (réponse oui à l'étape test F60), une étape de régularisation de la surface de l'élément numérique C2 après adaptation est si besoin mise en œuvre par le module de remplissage 1B dans le mode de réalisation décrit ici (étape optionnelle F80). Cette étape de régularisation vise à modifier légèrement la surface de l'élément numérique C2 après déformation de sorte à la rendre plus conforme à la réalité physique des éléments de fibre constituant le matériau composite 3. Elle est réalisée le cas échéant au niveau de la ou des déformations subies par l'élément numérique C2.

Plus précisément dans l'exemple illustré à la figure 8, du fait de la discrétisation, l'élément numérique C2 présente des « coins » après déformation (indiqués par une fèche sur la figure 8B) qui ne sont pas représentatifs de la déformation réelle d'un élément de fibre du matériau composite 3. Pour pallier cette imprécision, une régularisation de la surface de l'élément numérique C2 est réalisée par le module de remplissage 1B au niveau de la déformation subie par l'élément numérique C2, c'est-à-dire ici au niveau du voxel de liaison C2-3 inséré entre les sous-ensembles C2-1 et C2-2 et appartenant à la portion de l'élément numérique C2 ayant subi une déformation.

Cette régularisation est mise en œuvre en tronquant le voxel de liaison C2-3 selon un plan diagonal à celui-ci, comme représenté schématiquement en deux dimensions sur la figure 8C. Cette troncature résulte en un voxel tronqué C2-3T.

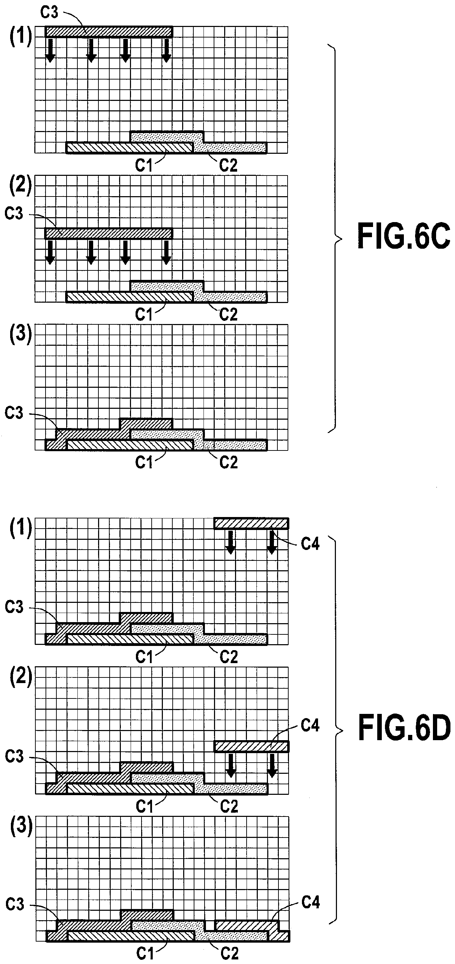

Les figures 6C(1) à 6C(3) et 6D(1) à 6D(3) illustrent respectivement le positionnement par le module de remplissage 1B de deux autres éléments numériques C3 et C4 dans le volume V tenant compte des éléments numériques déjà positionnés.

Ainsi, en référence à la figure 6C(3), la forme de l'élément numérique C3 est adaptée géométriquement à l'empreinte des éléments numériques C1 et C2 et à la paroi inférieure du volume V, plusieurs portions de l'élément numérique C3 subissant des déformations.

En référence à la figure 6D(3), la forme de l'élément numérique C3 est adaptée géométriquement à l'empreinte de l'élément numérique C2 uniquement, et à la présence de la paroi inférieure du volume V.

La figure 6D(3) montre ainsi que le remplissage du volume V réalisé conformément à l'invention par le module de remplissage 1B minimise les vides entre les éléments numériques.

En effet, on comprend bien au vu de ce qui précède que contrairement à l'état de la technique, l'invention ne se limite pas lors de l'adaptation géométrique de l'élément numérique Ci, à une inclinaison de l'axe longitudinal d'une portion de cet élément par rapport à son axe principal Δi. D'autres déformations géométriques peuvent être envisagées pour certains éléments numériques de sorte à minimiser la présence de vides entre les éléments numériques. Aucune limitation n'est attachée a priori au type de déformations envisagées.

Les étapes F30 à F80 sont mises en œuvre par le module de remplissage 1B pour une pluralité N d'éléments numériques (étape F90 de vérification d'un critère d'arrêt du procédé).

Le nombre N peut être un entier prédéterminé.

En variante, il peut dépendre de la réalisation d'un critère de remplissage du volume élémentaire V.

Dans une autre variante encore, le module de remplissage 1B stoppe le remplissage du volume élémentaire V quand il détecte qu'il n'arrive plus à positionner les éléments numériques dans le volume V et/ou à adapter leur forme aux éléments numériques précédemment positionnés.

Dans le mode de réalisation décrit ici, on considère une distribution uniforme des positions des éléments numériques C1,...,CN dans le plan P0 lors de l'étape F30. Compte tenu de cette hypothèse, il est possible que plusieurs éléments numériques considérés successivement par le module de remplissage 1B se trouvent associés à des positions situées dans une même zone du plan P0 de sorte qu'il peut s'avérer difficile pour le module de remplissage 1B de positionner ces éléments numériques dans le bas du volume V (ou dans une autre zone en fonction de l'occurrence de ce phénomène), laissant ainsi de nombreux vides entre les éléments numériques.

Pour pallier ce problème, sur détection d'une telle situation (événement prédéterminé au sens de l'invention), la loi de distribution spatiale utilisée pour déterminer la position d'un élément numérique peut être réévaluée de sorte à tenir compte de la position dans le plan P0 des éléments numériques précédemment positionnés, autrement dit de leur distribution spatiale dans le plan P0.

Dans le mode de réalisation décrit ici, suite au remplissage du volume élémentaire V, le module de remplissage 1B met en œuvre une étape de post-traitement du volume élémentaire V rempli (étape F100).

Cette étape de post-traitement comprend l'insertion entre les différents éléments numériques positionnés et mis en contact dans le volume V, d'éléments d'interface d'épaisseur prédéterminée traduisant l'existence d'éléments cohésifs (résine) entre les copeaux de fibre constituant le matériau composite 3. Ces éléments d'interface permettent de simuler lors du chargement du VER (cf. étape E30 de la figure 1) la décohésion des éléments de fibre du matériau composite qui peut apparaître notamment sous l'effet d'un cisaillement dans le plan (X,Y). Plus précisément, ils permettent de modéliser la matrice et l'interaction entre les fibres. Il convient de noter qu'on pourrait en théorie envisager une épaisseur nulle pour ces éléments d'interface. Toutefois, on s'expose alors à un risque d'avoir des artefacts de calcul dans la modélisation en éléments finis. L'épaisseur des éléments d'interface ajoutés par le module de remplissage 1B au niveau des zones de contact entre les éléments numériques est par conséquent choisie préférentiellement faible pour respecter le fort taux de fibres du matériau composite 3 tout en évitant de tels artefacts. Par exemple, on choisit cette épaisseur inférieure à 1% de la taille moyenne d'un voxel.

Préférentiellement, on adapte la structure de la voxelisation initialement afin de tenir compte de ces éléments interfaces.

A l'issue de cette étape de post-traitement, le volume élémentaire V ainsi obtenu constitue un volume élémentaire représentatif 2 de la microstructure du matériau composite 3 (étape F110). Il présente grâce à l'invention un taux de remplissage en éléments de fibre important, de l'ordre de 98-99%.

En outre, il est avantageusement déjà discrétisé et peut alors être soumis, comme décrit précédemment, à différents cas de chargement prédéfinis (ex. cisaillements, tractions, etc.) afin d'estimer, à partir de sa réponse à ces chargements, des propriétés homogénéisées du matériau composite 3 (cf. étapes E30 à E50 décrites précédemment en référence à la figure 1).

Pour ce faire, et de façon connue, différentes propriétés élastiques sont attribuées aux voxels des éléments numériques C1,...,CN positionnés dans le volume (propriétés connues des éléments de fibre du matériau composite 3), et aux éléments d'interface ajoutés lors de l'étape F100 de post-traitement ainsi qu'aux vides présents entre les éléments numériques (propriétés isotropes proches des propriétés de la résine, et adaptées pour que l'estimation de la réponse du VER soit aussi proche que possible de la réponse d'un échantillon réel).

Dans un autre mode de réalisation, les éléments numériques C1,...,CN et le volume élémentaire V ne sont discrétisés qu'après remplissage du volume, par exemple à l'aide d'une méthode des éléments finis. Dans ce mode de réalisation, l'adaptation géométrique est alors réalisée en utilisant des considérations de géométrie euclidienne connues de l'homme du métier.

Comme mentionné précédemment, l'invention a une application privilégiée dans la reconstruction d'un volume élémentaire représentatif d'une microstructure d'un matériau composite à DFC. Toutefois, elle ne se limite pas à ce type de matériau composite et peut être aisément utilisée pour d'autres matériaux composites, comme par exemple des matériaux composites de type BMC ou SMC.

## Revendications

1. Procédé de reconstruction numérique d'un volume élémentaire représentatif (2) d'une microstructure de matériau composite pour la fabrication de matériaux composites (3), ce procédé comprenant :
- une étape de définition (F10) d'un volume élémentaire ;
- une étape de remplissage du volume élémentaire défini avec une pluralité d'éléments numériques modélisant des éléments de fibres du matériau composite, chaque élément numérique s'étendant longitudinalement selon un axe principal, cette étape de remplissage comprenant :
o une étape d'association (F30) à chaque élément numérique d'une position dans un plan déterminé de l'espace et d'une orientation de son axe principal dans ce plan ; et
o une étape de positionnement successif de chaque élément numérique dans le volume élémentaire, en conformité avec la position et l'orientation qui lui ont été associées, cette étape de positionnement comprenant une mise en contact (F40) de l'élément numérique avec au moins une paroi du volume élémentaire et/ou au moins un élément numérique précédemment positionné, et une adaptation géométrique (F50) de l'élément numérique à ladite au moins une paroi et/ou audit au moins un élément numérique précédemment positionné avec lesquels il est mis en contact,
au moins une portion d'un élément numérique utilisé pour remplir le volume élémentaire subissant, lors de l'adaptation géométrique, une déformation autre qu'une inclinaison de son axe longitudinal par rapport à l'axe principal de cet élément numérique, ledit procédé comprenant en outre une étape de discrétisation (F10,F30) du volume élémentaire et de chaque élément numérique de façon uniforme en une pluralité de voxels, et l'adaptation géométrique comprenant le positionnement (F50) d'au moins deux sous-ensembles de voxels (C2-1,C2-2) de l'élément numérique dans des plans de l'espace décalés verticalement l'un par rapport à l'autre.

2. Procédé selon la revendication 1, dans lequel l'étape d'adaptation géométrique (F50) d'un élément numérique est mise en œuvre en traitant séparément chaque voxel de cet élément numérique.

3. Procédé selon la revendication 1 ou 2, dans lequel l'adaptation géométrique comprend, avant de positionner un dit sous-ensemble de voxels dans un dit plan de l'espace, une vérification préalable de l'existence d'au moins un voxel dans ce plan non occupé par un voxel d'un élément numérique précédemment positionné ou par la paroi du volume élémentaire, ledit voxel non occupé étant aligné verticalement avec un voxel dudit sous-ensemble de voxels.

4. Procédé selon l'une quelconque des revendications 1 à 3, dans lequel au moins un voxel d'un dit sous-ensemble est en contact avec un voxel d'un élément numérique déjà positionné ou avec la paroi du volume élémentaire.

5. Procédé selon l'une quelconque des revendications 1 à 4 comprenant en outre une étape d'insertion (F50) d'au moins un voxel de liaison (C2-3) entre les deux sous-ensembles de voxels.

6. Procédé selon l'une quelconque des revendications 1 à 4 dans lequel, si les plans de l'espace sont décalés verticalement d'un nombre supérieur à un nombre prédéterminé de voxels, l'élément numérique est supprimé du volume élémentaire (F70).

7. Procédé selon l'une quelconque des revendications 1 à 6 comprenant en outre une étape de régularisation (F80) de la surface d'au moins un élément numérique mis en contact avec un élément numérique précédemment positionné dans le volume élémentaire et dont au moins une portion a subi une déformation lors de l'adaptation géométrique, ladite régularisation étant effectuée au niveau de la déformation.

8. Procédé selon la revendication 7 dans lequel la régularisation comprend, lorsque l'élément numérique est discrétisé en une pluralité de voxels, une troncature d'au moins un voxel de ladite au moins une portion ayant subi une déformation selon un plan diagonal au voxel.

9. Procédé selon l'une quelconque des revendications 1 à 8 comprenant en outre une étape de post-traitement (F100) du volume élémentaire comprenant l'insertion entre au moins deux éléments numériques mis en contact dans le volume élémentaire d'un élément d'interface de dimension prédéterminée.

10. Procédé selon l'une quelconque des revendications 1 à 9 dans lequel les positions associées aux éléments numériques au cours de l'étape d'association sont sélectionnées suivant une distribution spatiale uniforme, cette distribution uniforme étant ajustée sur détection d'un événement prédéterminé en fonction de la distribution spatiale des éléments numériques précédemment positionnés.

11. Programme d'ordinateur comportant des instructions pour l'exécution des étapes du procédé de reconstruction numérique selon l'une quelconque des revendications 1 à 10 lorsque ledit programme est exécuté par un ordinateur.

12. Support d'enregistrement lisible par un ordinateur sur lequel est enregistré un programme d'ordinateur comprenant des instructions pour l'exécution des étapes du procédé de reconstruction numérique selon l'une quelconque des revendications 1 à 10.

13. Dispositif (1) de reconstruction numérique d'un volume élémentaire représentatif (2) d'une microstructure de matériau composite (3) pour la fabrication de matériaux composites, ce dispositif comprenant :
- un module de définition (1A) d'un volume élémentaire ;
- un module de remplissage (1B) apte à remplir le volume élémentaire défini avec une pluralité d'éléments numériques modélisant des éléments de fibres du matériau composite, chaque élément numérique s'étendant longitudinalement selon un axe principal, ce module de remplissage étant apte à :
o associer à chaque élément numérique une position dans un plan déterminé de l'espace et une orientation de son axe principal dans ce plan ; et
o à positionner successivement chaque élément numérique dans le volume élémentaire, en conformité avec la position et l'orientation qui lui ont été associées, le module de remplissage étant apte lors de ce positionnement à mettre en contact l'élément numérique avec au moins une paroi du volume élémentaire et/ou au moins un élément numérique précédemment positionné, et à adapter géométriquement l'élément numérique à ladite au moins une paroi et/ou audit au moins un élément numérique précédemment positionné avec lesquels il est mis en contact,
au moins une portion d'un élément numérique utilisé pour remplir le volume élémentaire subissant, lors de l'adaptation géométrique, une déformation autre qu'une inclinaison de son axe longitudinal par rapport à l'axe principal de cet élément numérique, ledit dispositif étant en outre configuré pour discrétiser le volume élémentaire et chaque élément numérique de façon uniforme en une pluralité de voxels, et l'adaptation géométrique comprenant le positionnement d'au moins deux sous-ensembles de voxels (C2-1,C2-2) de l'élément numérique dans des plans de l'espace décalés verticalement l'un par rapport à l'autre.

## Patentansprüche

1. Verfahren zur digitalen Rekonstruktion eines elementaren Volumens (2), das für eine Mikrostruktur aus Verbundstoff repräsentativ ist, für die Herstellung von Verbundstoffen (3), wobei dieses Verfahren umfasst:
- einen Schritt des Definierens (F10) eines elementaren Volumens;
- einen Schritt des Füllens des definierten elementaren Volumens mit einer Vielzahl digitaler Elemente, die Faserelemente des Verbundstoffs modellieren, wobei sich jedes digitale Element längs gemäß einer Hauptachse erstreckt, wobei dieser Füllschritt umfasst:
∘ einen Schritt des Zuordnens (F30) zu jedem digitalen Element einer Position in einer festgelegten Ebene des Raums und einer Ausrichtung seiner Hauptachse in dieser Ebene; und
∘ einen Schritt des schrittweisen Positionierens jedes digitalen Elements in dem elementaren Volumen in Übereinstimmung mit der ihm zugeordneten Position und Ausrichtung, wobei dieser Positionierungsschritt ein Inkontaktversetzen (F40) des digitalen Elements mit mindestens einer Wand des elementaren Volumens und/oder mindestens einem zuvor positionierten digitalen Element und eine geometrische Anpassung (F50) des digitalen Elements an die mindestens eine Wand und/oder an das mindestens eine zuvor positionierte digitale Element umfasst, mit denen es in Kontakt versetzt ist,
wobei mindestens ein Abschnitt eines digitalen Elements, das zum Füllen des elementaren Volumens verwendet wird, bei der geometrischen Anpassung einer Verformung unterzogen wird, die eine andere als die Neigung seiner Längsachse im Verhältnis zur Hauptachse dieses digitalen Elements ist, wobei das Verfahren ferner einen Diskretisierungsschritt (F10, F30) des elementaren Volumens und jedes digitalen Elements gleichmäßig in eine Vielzahl von Voxeln umfasst und die geometrische Anpassung die Positionierung (F50) von mindestens zwei Voxel-Unteranordnungen (C2-1, C2-2) des digitalen Element in Ebenen des Raums umfasst, die zueinander vertikal versetzt sind.

2. Verfahren nach Anspruch 1, wobei der Schritt der geometrischen Anpassung (F50) eines digitalen Elements durch separate Verarbeitung jedes Voxels dieses digitalen Elements durchgeführt wird.

3. Verfahren nach Anspruch 1 oder 2, wobei die geometrische Anpassung vor der Positionierung einer Voxel-Unteranordnung in einer Ebene des Raums eine vorherige Überprüfung des Vorhandenseins von mindestens einem Voxel in dieser Ebene umfasst, das nicht von einem Voxel eines zuvor positionierten digitalen Elements oder von der Wand des elementaren Volumens besetzt ist, wobei das nicht besetzte Voxel vertikal mit einem Voxel der Voxel-Unteranordnung ausgerichtet ist.

4. Verfahren nach einem der Ansprüche 1 bis 3, wobei mindestens ein Voxel einer Unteranordnung mit einem Voxel eines bereits positionierten digitalen Elements oder mit der Wand des elementaren Volumens im Kontakt ist.

5. Verfahren nach einem der Ansprüche 1 bis 4, das ferner einen Integrationsschritt (F50) von mindestens einem Verbindungsvoxel (C2-3) zwischen die beiden Voxel-Unteranordnungen umfasst.

6. Verfahren nach einem der Ansprüche 1 bis 4, wobei, wenn die Ebenen des Raums vertikal um einer Anzahl versetzt sind, die größer als eine vorher festgelegte Anzahl von Voxeln ist, das digitale Element aus dem elementaren Volumen (F70) gelöscht wird.

7. Verfahren nach einem der Ansprüche 1 bis 6, das ferner einen Regularisierungsschritt (F80) der Oberfläche von mindestens einem digitalen Element umfasst, das mit einem zuvor in das elementare Volumen positionierten digitalen Element in Kontakt versetzt wurde und von dem mindestens ein Abschnitt bei der geometrischen Anpassung einer Verformung unterzogen wurde, wobei die Regularisierung im Bereich der Verformung durchgeführt wird.

8. Verfahren nach Anspruch 7, wobei die Regularisierung, wenn das digitale Element in eine Vielzahl von Voxeln diskretisiert ist, eine Trunkierung von mindestens einem Voxel des mindestens einen Abschnitts umfasst, der einer Verformung gemäß einer zum Voxel diagonalen Ebene unterzogen wurde.

9. Verfahren nach einem der Ansprüche 1 bis 8, das ferner einen Nachverarbeitungsschritt (F100) des elementaren Volumens umfasst, der die Integration eines Schnittstellenelements mit einer vorher festgelegten Abmessung zwischen mindestens zwei im elementaren Volumen in Kontakt versetzte digitale Elemente umfasst.

10. Verfahren nach einem der Ansprüche 1 bis 9, wobei die den digitalen Elementen während des Zuordnungsschritts zugeordneten Positionen gemäß einer gleichmäßigen räumlichen Verteilung ausgewählt sind, wobei diese gleichmäßige Verteilung bei Detektion eines vorher festgelegten Ereignisses in Abhängigkeit von der räumlichen Verteilung der zuvor positionierten digitalen Elemente angepasst wird.

11. Rechnerprogramm, das Befehle für die Ausführung der Schritte des digitalen Rekonstruktionsverfahrens nach einem der Ansprüche 1 bis 10 aufweist, wenn das Programm von einem Rechner ausgeführt wird.

12. Rechnerlesbares Speichermedium, auf dem ein Rechnerprogramm gespeichert ist, das Befehle für die Ausführung der Schritte des digitalen Rekonstruktionsverfahrens nach einem der Ansprüche 1 bis 10 umfasst.

13. Vorrichtung (1) zur digitalen Rekonstruktion eines elementaren Volumens (2), das für eine Mikrostruktur aus Verbundstoff (3) repräsentativ ist, für die Herstellung von Verbundstoffen, wobei diese Vorrichtung umfasst:
- ein Modul zum Definieren (1A) eines elementaren Volumens;
- ein Modul zum Füllen (1B), das imstande ist, das definierte elementare Volumen mit einer Vielzahl digitaler Elemente zu füllen, die Faserelemente des Verbundstoffs modellieren, wobei sich jedes digitale Element längs gemäß einer Hauptachse erstreckt, wobei dieses Füllmodul imstande ist:
∘ jedem digitalen Element eine Position in einer festgelegten Ebene des Raums und einer Ausrichtung seiner Hauptachse in dieser Ebene zuzuordnen; und
∘ schrittweise jedes digitale Element in dem elementaren Volumen in Übereinstimmung mit der ihm zugeordneten Position und Ausrichtung zu positionieren, wobei das Füllmodul imstande ist, bei dieser Positionierung das digitale Element mit mindestens einer Wand des elementaren Volumens und/oder mindestens einem zuvor positionierten digitalen Element in Kontakt zu versetzen und das digitale Element an die mindestens eine Wand und/oder an das mindestens eine zuvor positionierte digitale Element geometrisch anzupassen, mit denen es in Kontakt versetzt ist,
wobei mindestens ein Abschnitt eines digitalen Elements, das zum Füllen des elementaren Volumens verwendet wird, bei der geometrischen Anpassung einer Verformung unterzogen wird, die eine andere als eine Neigung seiner Längsachse im Verhältnis zur Hauptachse dieses digitalen Elements ist, wobei die Vorrichtung ferner ausgelegt ist, um das elementare Volumen und jedes digitale Element gleichmäßig in eine Vielzahl von Voxeln zu diskretisieren und die geometrische Anpassung die Positionierung von mindestens zwei Voxel-Unteranordnungen (C2-1, C2-2) des digitalen Elements in Ebenen des Raums umfasst, die zueinander vertikal versetzt sind.

## Claims

1. A method of digitally reconstructing a representative volume element (2) of microstructure of a composite material for the fabrication of composite materials (3), the method comprising:
• a definition step (F10) for defining a volume element;
• a packing step for packing the defined volume element with a plurality of digital elements modelling fiber elements of the composite material, each digital element extending longitudinally along a main axis, this packing step comprising:
• an association step (F30) for associating each digital element with a position in a determined plane in three-dimensional space and with an orientation of its main axis in that plane; and
• a positioning step for successively positioning each digital element in the volume element in compliance with the position and the orientation that are associated therewith, this positioning step comprising putting the digital element into contact (F40) with at least one wall of the volume element and/or at least one previously-positioned digital element, and geometrically adapting (F50) the digital element to said at least one wall and/or to said at least one previously-positioned digital element with which it is in contact;
at least a portion of a digital element used for packing the volume element being subjected during the geometrical adaptation to a deformation other than having its longitudinal axis inclined relative to the main axis of the digital element, said method further comprising a discretization step (F10, F30) for discretizing the volume element and each digital element in uniform manner into a plurality of voxels, and the geometrical adaptation comprising positioning (F50) at least two subsets (C2-C1, C2-2) of voxels of the digital element in planes in three-dimensional space that are vertically offset relative to each other.

2. A method according to claim 1, wherein the step of geometrically adapting (F50) a digital element is performed by separately processing each voxel of the digital element.

3. A method according to claim 1 or 2, wherein the geometrical adaptation comprises, prior to positioning a said subset of voxels in a said plane in three-dimensional space, prior verification that there exists at least one voxel in said plane that is not occupied by a voxel of a previously-positioned digital element or by the wall of the volume element, said non-occupied voxel being vertically in alignment with a voxel of said subset of voxels.

4. A method according to any one of claims 1 to 3, wherein at least one voxel of a said subset is in contact with a voxel of a digital element that has already been positioned or with the wall of the volume element.

5. A method according to any one of claims 1 to 4, further including an insertion step (F50) of inserting at least one link voxel (C2-3) between the two subsets of voxels.

6. A method according to any one of claims 1 to 4, wherein, if the planes in three-dimensional space are vertically offset by a number of voxels that is greater than a predetermined number, the digital element is eliminated (F70) from the volume element.

7. A method according to any one of claims 1 to 6, further including a smoothing step (F80) for smoothing the surface of at least one digital element put into contact with a previously-positioned digital element in the volume element and having at least one portion that has been subjected to deformation during the geometrical adaptation, said smoothing being performed at the deformation.

8. A method according to claim 7, wherein, when the digital element is discretized into a plurality of voxels, the smoothing comprises truncating at least one voxel of said at least one portion that has been subjected to deformation, the voxel(s) being truncated on a diagonal plane thereof.

9. A method according to any one of claims 1 to 8, further including a step of post-processing (F100) the volume element comprising inserting an interface element of predetermined dimensions between at least two contacting digital elements in the volume element.

10. A method according to any one of claims 1 to 9, wherein the positions associated with the digital elements during the association step are selected to have uniform spatial distribution, this uniform distribution being adjusted on detecting a predetermined event as a function of the spatial distribution of the previously-positioned digital elements.

11. A computer program including instructions for executing steps of the digital reconstruction method according to any one of claims 1 to 10 when said program is executed by a computer.

12. A computer readable storage medium storing a computer program including instructions for executing steps of the digital reconstruction method according to any one of claims 1 to 10.

13. A device (1) for digitally reconstructing a representative volume element (2) of microstructure of a composite material (3) for the fabrication of composite materials, the device comprising:
• a definition module (1A) for defining a volume element; and
• a packing module (1B) suitable for packing the defined volume element with a plurality of digital elements modelling fiber elements of the composite material, each digital element extending longitudinally along a main axis, the packing module being suitable for:
• associating each digital element with a position in a determined plane in three-dimensional space and with an orientation of its main axis in that plane; and
• successively positioning each digital element in the volume element in compliance with the position and the orientation that are associated therewith, the packing module being suitable during this positioning for putting the digital element into contact with at least one wall of the volume element and/or at least one previously-positioned digital element, and for geometrically adapting the digital element to said at least one wall and/or to said at least one previously-positioned digital element with which it is in contact;
at least a portion of a digital element used for packing the volume element being subjected during the geometrical adaptation to a deformation other than having its longitudinal axis inclined relative to the main axis of the digital element, said device being further configured for discretizing the volume element and each digital element in uniform manner into a plurality of voxels, and the geometrical adaptation comprising positioning (F50) at least two subsets (C2-C1, C2-2) of voxels of the digital element in planes in three-dimensional space that are vertically offset relative to each other.
